# EUROPEAN PATENT APPLICATION

(11) **EP 2 434 376 A1**
(43) Date of publication of application: **28.03.2012**
(21) Application number: 10777509.0
(22) Date of filing: 26.04.2010
(51) Int. Cl.: G06F 3/041, G06F 3/023, H03M 11/04, H03M 11/08, H04M 1/247, H04M 1/67

(54) **MOBILE TERMINAL DEVICE, AND CONTROL METHOD AND STORAGE MEDIUM FOR MOBILE TERMINAL DEVICE**

(30) Priority: 18.05.2009 JP 2009119959
(71) Applicant: NEC Corporation, Tokyo 108-8001 (JP)
(72) Inventor: BABA, Osamu, Tokyo 108-8001 (JP)
(74) Representative: Stork Bamberger
(86) International application number: PCT/JP2010/002991
(87) International publication number: WO 2010/134269

(57) **Abstract**

A mobile terminal device includes: a touch panel in which one of a plurality of segment areas is adjacent to the other segment areas different in at least three directions; a pattern storing unit that associates and stores any of the functions of the mobile terminal device with a registered pattern formed of the plurality of adjacent segment areas of the segment areas of the touch panel; a pattern recognizing unit that recognizes the plurality of segment areas continuously touched by a user, as an input pattern; and a function activating unit that compares the input pattern recognized by the pattern recognizing unit with the registered pattern stored in the pattern storing unit, and activates the function corresponding to the registered pattern when the input pattern matches the registered pattern.

## Description

### TECHNICAL FIELD

The present invention relates to a mobile terminal device, a method of controlling the mobile terminal device, and a storage medium.

### BACKGROUND ART

Recently, mobile terminal devices represented by mobile phones, mobile PCs, or the like have come into widespread use in general homes, and it is not uncommon for the elderly or small children to have mobile terminal devices. Accordingly, various techniques related to a mobile terminal device (universal design) easily operated by a user have been designed.

As such a technique, in Patent Document 1 (Japanese Laid-Open Patent Publication No. 2008-90680), the following mobile terminal device is described. In the mobile terminal device, an operation input in a circumferential rotation direction over a circular touch pad is detected, and it is possible to activate functions corresponding to the circumferential rotation direction and the number of rotations.

In addition, as such a kind of technique, in Patent Document 2 (Japanese Laid-Open Patent Publication No. 2007-74716), the following mobile terminal device is described. In the mobile terminal device, a function corresponding to an input of a touch pad is performed, and it is possible to deactivate the touch panel in a state when the touch panel cannot be operated, for example, when the case is closed or during a phone call.

### RELATED DOCUMENT

### PATENT DOCUMENT

[Patent Document 1] Japanese Laid-Open Patent Publication No. 2008-90680
[Patent Document 2] Japanese Laid-Open Patent Publication No. 2007-74716

### DISCLOSURE OF THE INVENTION

However, the technique has room for improvement on the following points. The mobile terminal device of Patent Document 1 is effective when the mobile terminal device has a few functions, but as the number of functions of the mobile terminal device increase, more rotations become necessary, and thus the burden related to the operation increases. In addition, it becomes difficult for a user to memorize which function corresponds to which operation (the number of rotations, and the rotation direction). Moreover, since the user traces over the same touch panel any number of times, there are cases when the user misunderstands the number of rotations traced.

The invention has been made in consideration of these situations, and an object of the invention is to provide a mobile terminal device, a method of controlling the mobile terminal device, and a storage medium in which various operation patterns easily handled by the user are registered, and a function corresponding to an input of the operation patterns is activated.

According to an aspect of the invention, there is provided a mobile terminal device including: a touch panel in which one of a plurality of segment areas is adjacent to the other segment areas different in at least three directions; a pattern storing unit that associates and stores any of the functions of the mobile terminal device with a registered pattern formed of the plurality of adjacent segment areas of the segment areas of the touch panel; a pattern recognizing unit that recognizes the plurality of segment areas continuously touched by a user, as an input pattern; and a function activating unit that compares the input pattern recognized by the pattern recognizing unit with the registered pattern stored in the pattern storing unit, and activates the function corresponding to the registered pattern when the input pattern matches the registered pattern.

In addition, according to another aspect of the invention, there is provided a method of controlling a mobile terminal device including: associating and storing any of the functions of the mobile terminal device with a registered pattern formed from a plurality of adjacent segment areas over a touch panel in which one of the plurality of segment areas is adjacent to the other segment areas different in at least three directions; recognizing the plurality of segment areas continuously touched by a user, as an input pattern; and comparing the input pattern recognized in the recognizing of the pattern with the registered pattern stored in the storing of the pattern, and activating the function corresponding to the registered pattern when the input pattern matches the registered pattern.

In addition, according to yet another aspect of the invention, there is provided a storage medium in which computer-readable programs are stored, wherein the program causes a computer to execute: associating and storing any of the functions of the mobile terminal device with a registered pattern formed from a plurality of adjacent segment areas over a touch panel in which one of the plurality of segment areas is adjacent to the other segment areas different in at least three directions; recognizing the plurality of segment areas continuously touched by a user, as an input pattern; and comparing the input pattern recognized in the recognizing of the pattern with the registered pattern stored in the storing of the pattern, and activating the function corresponding to the registered pattern when the input pattern matches the registered pattern.

According to the invention, to register the plurality of segment areas adjacent on the touch panel as the registered pattern, the user does not need to touch the same segment area many times, the user easily views the touched segment area, and it is possible to expect an effect of preventing an erroneous input. In addition, the user can memorize the registered pattern as the operation (gesture) on the touch panel, and thus easily memorize many kinds of registered patterns. In addition, the registered pattern in the invention may include the segment areas adj acent to the other segment areas different in three or more directions, and the segment areas adj acent to the segment area. A part or all of the segment areas of such registered patterns are a branching point for user gestures. Accordingly, it is possible to register more complex and more kinds of registered patterns.

According to the invention, a mobile terminal device, a method of controlling the mobile terminal device, and a storage medium, in which various operation patterns easily handled by the user are registered, and the functions corresponding the input operation patterns are proposed.

### BRIEF DESCRIPTION OF THE DRAWINGS

The above-described object, the other objects, characteristics, and advantages will be further clarified by the following preferred embodiments, and the following drawings accompanying them.

Fig. 1 is a configuration diagram illustrating a mobile terminal device according to an embodiment of the invention.
Fig. 2 is a diagram illustrating an example of a touch panel of the mobile terminal device according to the embodiment of the invention.
Fig. 3 is a functional block diagram of the mobile terminal device according to a first embodiment of the invention.
Fig. 4 is a diagram illustrating registered patterns stored in the mobile terminal device according to the first embodiment of the invention and functions corresponding to the registered patterns.
Fig. 5 is a diagram illustrating a segment area constituting the registered patterns stored in the mobile terminal device according to the first embodiment of the invention.
Fig. 6 is a flowchart illustrating a method of controlling the mobile terminal device according to the first embodiment of the invention.
Fig. 7 is a functional block diagram of the mobile terminal device according to a second embodiment of the invention.
Fig. 8 is a diagram illustrating an example of registered patterns, functions, input condition information, and sequence designation information stored in the mobile terminal device according to the second embodiment of the invention.
Fig. 9 is a flowchart illustrating a method of controlling the mobile terminal device according to the second embodiment of the invention.

### DESCRIPTION OF EMBODIMENTS

Hereinafter, embodiments of the invention will be described with reference to the drawings. In all the drawings, the same reference numerals and signs are given to the same constituent elements, and the description will not be repeated.

### (First Embodiment)

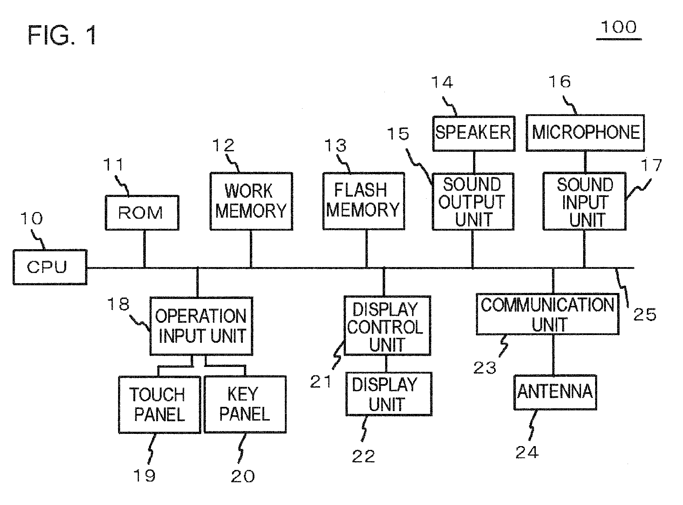

Fig. 1 is a configuration diagram illustrating a mobile terminal device according to the embodiment of the invention. The mobile terminal device 100 of the embodiment is provided with a central processing unit (CPU) 10, and the CPU 10 is connected to the constituent elements through a bus 25 and can transmit and receive various kinds of data and programs. The CPU 10 can realize various functions by executing the received programs.

A ROM 11 is a read-only memory storing fixed data such as various control programs executed by the CPU 10.

A work memory 12 is configured by a random access memory (RAM), and stores data temporarily necessary for the CPU 10 to execute the programs.

A flash memory 13 stores rewritable data such as personal names (corporation names), phone numbers, and mail addresses registered by a phone number directory function.

A sound output unit 15 is a circuit converting a digital signal processed by the CPU 10 into an analog signal auditorily output from a speaker 14.

A sound input unit 17 is a circuit converting the analog signal acquired from a microphone 16 into a digital signal which can be processed by the CPU 10.

An operation input unit 18 is a circuit converting an operation input of the user received by a touch panel 19 or a key panel 20 into a digital signal which can be processed by the CPU 10.

The touch panel 19 has a plurality of segment areas, and each segment area detects contact of the user. In the touch panel 19, one of the plurality of segment areas is adjacent in at least three directions to the other segment areas which are respectively different. The touch panel 19 receives a position of the segment area detecting the contact of the user, or an operation input of the user according to movement of the position.

In addition, the detection method of the touch panel 19 may be a capacitive method or a pressure sensitive method. In addition, the touch panel 19 may detect the contact by a finger of the user or may detect the contact by a dedicated tool, such as a touch pen, according to the detection method of the touch panel 19.

The key panel 20 has a plurality of keys, and the key pressed by the user can be detected. The key panel 20 receives the operation input of the user according to the kind or combination of keys pressed by the user.

A display control unit 21 is a control circuit controlling a display unit 22 on the basis of data or the like transmitted to or received from the CPU 10. The display unit 22 is a black and white or color liquid crystal panel or an organic electroluminescence (EL), a display device, or the like.

A communication unit 23 is a circuit converting the data or the like processed by the CPU 10 into a wireless signal which can be transmitted to the outside through an antenna 24, and is a circuit converting the wireless signal received from the outside into data which can be processed by the CPU 10.

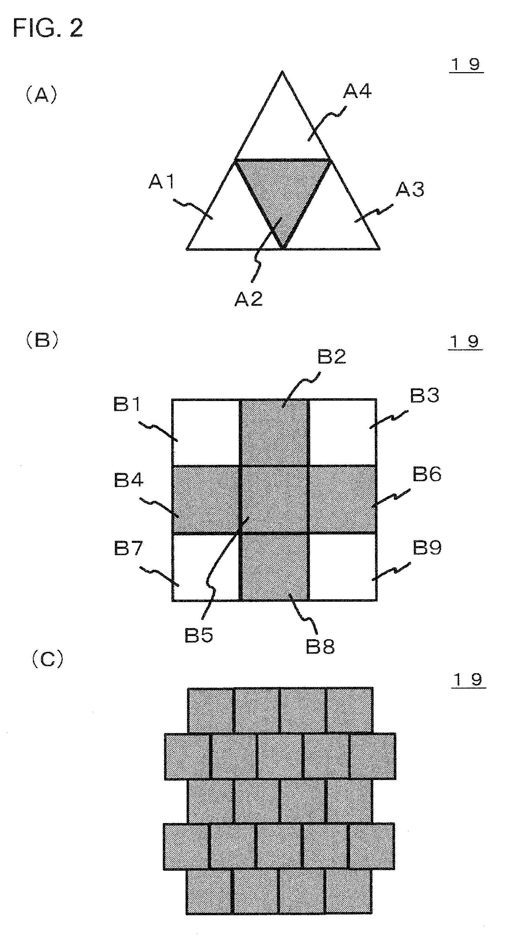

Fig. 2 is a diagram illustrating an example of the touch panel 19 of the mobile terminal device 100. In addition, in Fig. 2, although the outline of the segment area is shown by a solid line, this may be recognizable by the touch panel 19, and the user may view or may not view the segment area.

The plurality of segment areas of the touch panel 19 includes at least one segment area adj acent in at least 3 directions to the other segment areas which are respectively different. The adjacency means that a part or all of the outlines of the segment areas come into contact using lines, and a segment area coming into contact using a point is excluded.

For example, the touch panel 19 shown in Fig. 2(A) is configured by four triangular segment areas A1 to A4, and the shaded segment area A2 is adjacent to the other segment areas A1, A3, and A4 in three directions. In addition, the touch panel 19 shown in Fig. 2(B) is configured by nine rectangular segment areas B1 to B9, and the five shaded segment areas B2, B4, B5, B6, and B8 are adjacent to the other segment areas in three and four directions. In addition, Fig. 2(C) is configured by twenty-two segment areas, and all the segment areas are adj acent to the other segment areas in three to six directions.

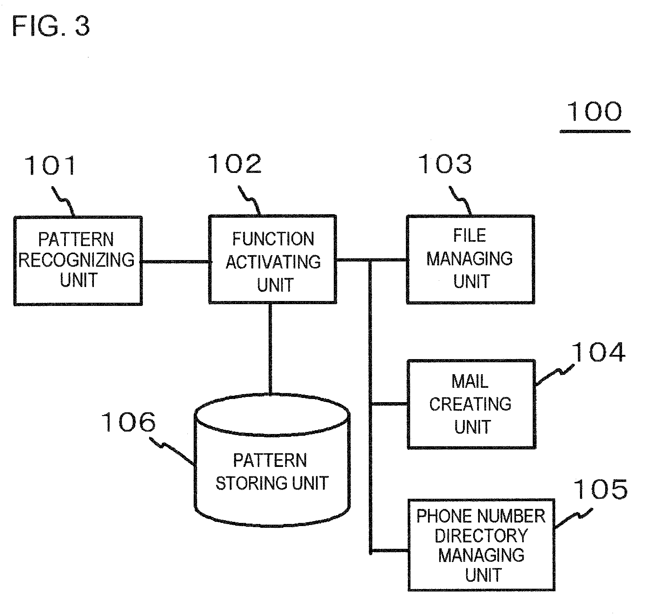

Fig. 3 is a functional block diagram illustrating the mobile terminal device 100 according to a first embodiment. The mobile terminal device 100 of the embodiment is provided with a pattern storing unit 106, a pattern recognizing unit 101, a function activating unit 102, a file managing unit 103, a mail creating unit 104, and a phone number directory managing unit 105.

In addition, the pattern storing unit 106 is a storage area included in the flash memory 13 of Fig. 1, which stores the registered pattern by the process of the CPU 10 of Fig. 1. The pattern recognizing unit 101, the function activating unit 102, the file managing unit 103, the mail creating unit 104, and the phone number directory managing unit 105 are software functions realized by reading and executing the programs stored in the ROM 11 by the CPU 10 of Fig. 1.

The pattern storing unit 106 associates and stores any of the functions of the mobile terminal device 100 with the registered pattern formed of the plurality of adjacent segment areas of the segment areas of the touch panel 19.

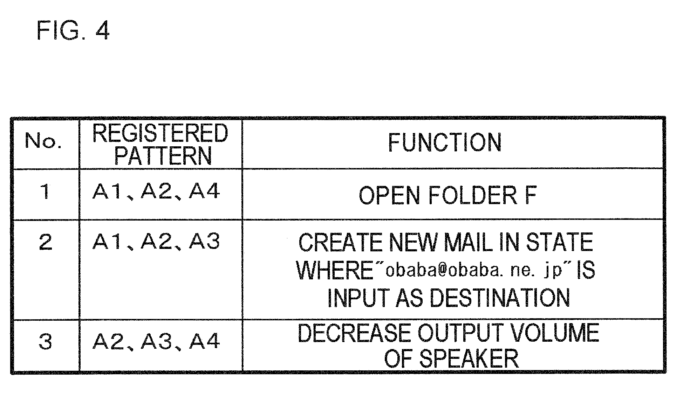

Fig. 4 is a diagram illustrating the registered patterns stored in the mobile terminal device 100 (the pattern storing unit 106) according to the first embodiment, and the functions corresponding to the registered patterns. In addition, the registered patterns shown herein are exemplified in the touch panel 19 of Fig. 2(A).

For example, the registered pattern of No.1 formed of A1, A2, and A4 in the touch panel 19 of Fig. 2(A) is associated with a function of opening a folder F (not shown). The registered pattern of No.2 formed of A1, A2, and A3 in the touch panel 19 of Fig. 2(A) is associated with a function of creating a new mail in a state where "obaba@obaba.ne.jp" is a destination. The registered pattern of No.3 formed of A2, A3, and A4 in the touch panel 19 of Fig. 2(A) is associated with a function of decreasing the output volume of the speaker 14 of Fig. 1.

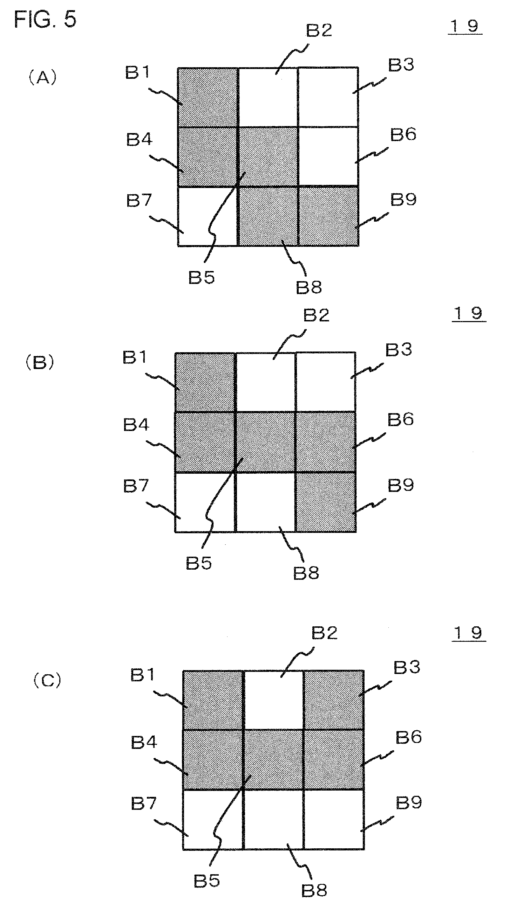

Fig. 5 is a diagram illustrating segment areas constituting the registered patterns in the touch panel 19 shown in Fig. 2(B). In addition, the shaded segment areas in Fig. 5 are the segment areas constituting the registered pattern. In such a touch panel 19, the plurality of segment areas B2, B4, B5, B6, and B8 are adjacent in at least 3 directions to the other segment areas which are respectively different. The registered pattern including at least two of the segment areas B2, B4, B5, B6, and B8 is generated and stored in the pattern storing unit 106, each of the shaded segment areas serves as a branching point, and thus it is possible to register more kinds of registered patterns. For example, in Fig. 5(A) and Fig. 5(B), the segment area B5 is the branching point for different registered patterns. In Fig. 5(B) and Fig. 5(C), the segment area B6 is the branching point for different registered patterns.

The pattern recognizing unit 101 recognizes the plurality of segment areas continuously touched by the user, as the input pattern. Herein, the continuously touched segment areas means segment areas touched by the user until the pattern recognizing unit 101 recognizes the input completion of the input pattern after the pattern recognizing unit 101 recognizes the input start of the input pattern.

In addition, the pattern recognizing unit 101 may recognize the input start of the input pattern when the user comes in contact with the touch panel 19 after a specific key included in the key panel 20 is pressed. The pattern recognizing unit 101 may recognize the input completion of the input pattern when the contact with the touch panel 19 of the user is released after the input of the input pattern is started.

The function activating unit 102 compares the input pattern recognized by the pattern recognizing unit 101 with the registered pattern stored in the pattern storing unit 106. When the input pattern matches the registered pattern, the function activating unit 102 activates the function corresponding to the registered pattern. Herein, the match may be a complete match, may be that the input pattern includes all the registered patterns, and may permit some difference between the registered pattern and the input pattern.

For example, when the function activating unit 102 activates the function corresponding to the registered pattern of NO.1 in Fig. 4, the function activating unit 102 activates the file managing unit 103 managing a storage position (folder) of files stored in the mobile terminal device 100. The function activating unit 102 controls the file managing unit 103 to search the folder F, and opens the searched folder F. The file managing unit 103 transmits the disclosure content of the opened folder F to the display control unit 21 of Fig. 1, and the display control unit 21 displays the disclosure content of the transmitted folder F on the display unit 22 of Fig. 1.

When the function activating unit 102 activates the function corresponding to the registered pattern of No.2 in Fig. 4, the function activating unit 102 activates the mail creating unit 104 and the phone number directory managing unit 105. In addition, the mail creating unit 104 generates an e-mail on the basis of the operation input of the user received by the operating input unit 18, transmits a creation screen of the e-mail to the display control unit 21 of Fig. 1, and can display the creation screen on the display unit 22. The phone number directory managing unit 105 generates phone number directory information configured by associating the phone number information or the e-mail address information with the personal names or the corporation names (group names) on the basis of the operation input of the user received by the operation input unit 18, stores the generated phone number directory information in the storage medium such as the flash memory 13, transmits the phone number directory information to the display control unit 21, and can display the phone number directory information on the display unit 22. The function activating unit 102 operates the mail creating unit 104 and the phone number directory managing unit 105, then searches "obaba@obaba.ne.jp" from the phone number directory information managed by the phone number directory managing unit 105, cause the mail creating unit 104 to generate a new e-mail, inputs "obaba@obaba.ne.jp" searched by the phone number directory managing unit 105 to a destination section, transmits the creation screen to the display control unit 21, and displays the creation screen on the display unit 22.

In addition, when the function activating unit 102 activates the function corresponding to the registered pattern of No.3 in Fig. 4, the function activating unit 102 controls the speaker 14 of Fig. 1 to decrease the output sound volume.

As described above, the activating the function corresponding to the registered pattern in the embodiment is to control the constituent elements realized by the hardware of the mobile terminal device 100 or one or both of the constituent elements realized by the software to realize the function.

In the embodiment, in the ROM 11, a program for causing the CPU 10 to execute a pattern storing process of associating and storing any of the functions of the computer with the registered pattern formed of the plurality of adj acent segment areas on the touch panel 19 in which one of the plurality of segment areas is adjacent in at least 3 directions to the other segment areas which are respectively different is stored. In addition, in the ROM 11, a program for causing the CPU 10 to execute a pattern recognizing process of recognizing the plurality of segment areas continuously touched by the user as the input pattern is stored. In addition, in the ROM 11, a program for causing the CPU 10 to execute a function activating process of activating the function corresponding to the registered pattern when the input pattern recognized by the pattern recognizing process is compared with the registered pattern stored by the pattern storing process and the input pattern matches the registered pattern is stored.

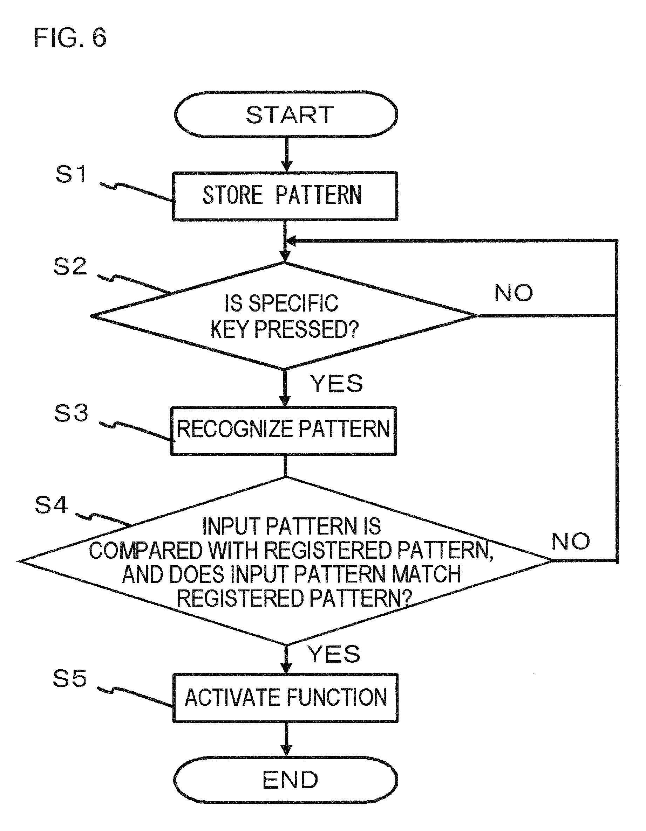

Fig. 6 is a flowchart illustrating a method of controlling the mobile terminal device 100 according to the first embodiment. The control method of the embodiment includes a pattern storing step of associating and storing any of the functions of the mobile terminal device 100 with the registered pattern formed of the plurality of adjacent segment areas on the touch panel 19 in which one of the plurality of segment areas is adjacent in at least 3 directions to the other segment areas which are respectively different (Step S1).

The control method of the embodiment includes, when a specific key included in the key panel 20 is pressed (Step S2: Yes), a pattern recognizing step (Step S3) of recognizing the plurality of segment areas continuously touched by the user as the input pattern. However, when the specific key included in the key panel 20 is not pressed (Step S2: No), it enters a standby state until the specific key is pressed.

The control method of the embodiment includes a function activating step (Step S5) of activating the function corresponding to the registered pattern when the input pattern recognized in the pattern recognizing step (Step S3) is compared with the registered pattern stored in the pattern storing step (Step S1) and the input pattern matches the registered pattern (Step S4: Yes). However, when the input pattern recognized in the pattern recognizing step (Step S3) is compared with the registered pattern stored in the pattern storing step (Step S1) and the input pattern does not match the registered pattern (Step S4: No), it enters the waiting state until the specific key is pressed again.

The function is activated in the function activating step (Step S5), is operated, and the control method of the embodiment is ended.

Herein, an effect of the embodiment will be described. To register the segment areas adjacent on the touch panel 19 as the registered pattern, the user does not need to touch the same segment area many times, the user easily views the touched segment area, and it is possible to expect an effect of preventing an erroneous input.

In addition, the registered pattern in the embodiment may include the segment areas adj acent to the other segment areas different in three or more directions, and the segment areas adjacent to the segment area. A part or all of the segment areas of such registered patterns is a branching point for user gestures. Accordingly, it is possible to register more complex and more kinds of registered patterns.

In addition, a part or all of the segment areas of the touch panel of the embodiment are adj acent in at least 3 directions to the other segment areas which are respectively different, and thus it is possible to form a registered pattern in a complex shape, for example, a registered pattern patterned on characters or symbols. Accordingly, the user may easily memorize many kinds of registered patterns.

Even if the mobile terminal device receives an input pattern patterned on characters or symbols, the process of recognizing it as a character is not performed. Accordingly, a processing load is smaller than that of a device operating a function on the basis of character information input by holograph.

### (Second Embodiment)

A configuration of a mobile terminal device 100 of a second embodiment is shown in Fig. 1 similarly to the first embodiment.

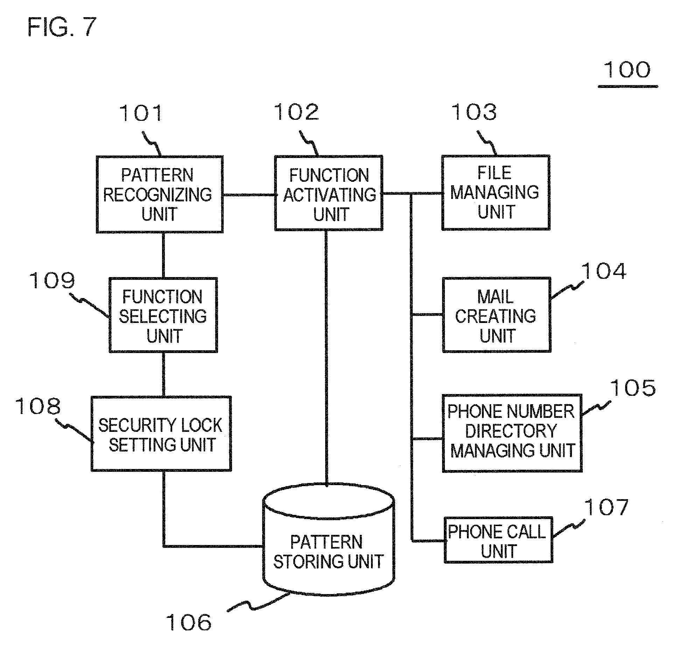

Fig. 7 is a functional block diagram in the mobile terminal device 100 according to the second embodiment. As compared with the mobile terminal device 100 of the first embodiment, a phone call unit 107, a security lock setting unit 108, and a function selecting unit 109 are added.

In addition, the phone call unit 107, the security lock setting unit 108, and the function selecting unit 109 are software functions realized by reading and executing the programs stored in the ROM 11 by the CPU 10 shown in Fig. 1.

The phone call unit 107 can be connected in a phone call to the other phone (not shown) through the communication unit 23 and the antenna unit 24 of Fig. 1.

When the function activating unit 102 compares the input pattern recognized by the pattern recognizing unit 101 with the registered pattern stored in the pattern storing unit 106 and the input pattern does not match the registered pattern, the function selecting unit 109 selects any of the functions of the mobile terminal device according to the operation input of the user. The pattern storing unit 106 of the embodiment associates and stores the input pattern as the registered pattern with the function selected by the function selecting unit 109.

In addition, the pattern storing unit 106 of the embodiment associates and stores sequence designation information for designating at least one sequence of the segment areas constituting the registered pattern with the registered pattern. In addition, the pattern storing unit 106 of the embodiment associates and stores input condition information representing a condition of receiving the input pattern with the registered pattern.

The security lock setting unit 108 sets a security lock to any of the functions of the mobile terminal device 100. The pattern storing unit 106 of the embodiment associates and stores the function of setting the security lock by the security lock setting unit 108 with the registered pattern. The function activating unit 102 of the embodiment releases the security lock set by the function corresponding to the registered pattern, and activates the function.

In addition, the security lock described herein may be set for each of the file managing unit 103, the mail creating unit 104, the phone number directory managing unit 105, or the phone call unit 107 shown in Fig. 7. In addition, the security lock may set individual data handled by various functions described above, for example, a unit of file managed by the file managing unit 103 or a unit of folder of storing files, and may be set for each phone number directory information managed by the phone number directory managing unit 105.

In addition, the security lock may be set for each of the constituent elements shown in Fig. 1.

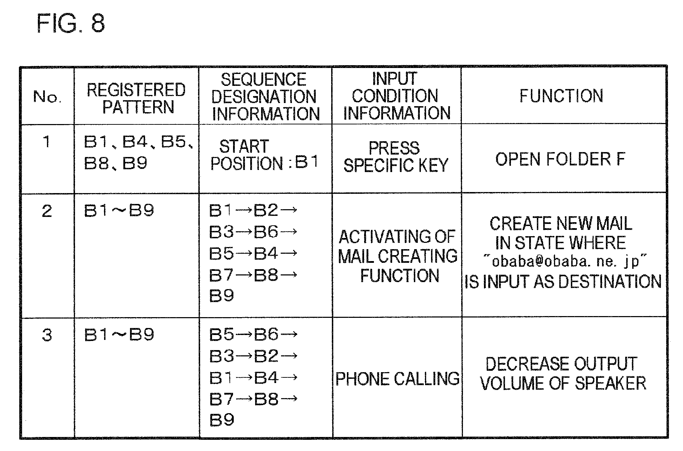

Fig. 8 is a diagram illustrating an example of the registered pattern stored in the mobile terminal device 100 (the pattern storing unit 106) according to the second embodiment, the function, the sequence designation information, and the input condition information. In addition, the registered pattern shown herein is exemplified in the touch panel 19 of Fig. 2(B).

For example, the registered pattern of No.1 formed of the segment areas B1, B4, B5, B8, and B9 may be associated with the sequence designation information of designating the segment area B1 as the start position of the input, the input condition information based on the condition of pressing the specific key included in the key panel 20, and the function of opening the folder F. The registered pattern of No.2 formed of the segment areas B1 to B9 may be associated with the sequence designation information of designating the input of the sequence of B1→B2→B3→B6→B5→B4→B7→B8→B9, the input condition information based on the condition of operating the mail creating function, and the function of creating the new mail in the state where "obaba@obaba.ne.jp" is the destination. The registered pattern of No.3 formed of the segment areas B1 to B9 may be associated with the sequence designation information of designating the input of the sequence of B5→B6→B3→B2→B1→B4→B7→B8→B9, the input condition information based on the condition of phone calling, and the function of decreasing the output sound volume (phone call sound volume) of the speaker.

Herein, the operating of the mail creating function is a state where the mail creating unit 104 of Fig. 7 transmits the mail creation screen to the display control unit 21 of Fig. 1 and is displayed on the display unit 22. The phone calling is a state where the phone call unit 107 of Fig. 7 is connected in a phone call to another phone (not shown) through the communication unit 23 and the antenna 24 of Fig. 1.

The constituent segment areas of the registered pattern of No.2 and the registered pattern of No.3 are the same, but the corresponding input condition information and sequence designation information are different, and thus the mobile terminal device 100 recognizes them as the different registered patterns, which may be individually stored in the pattern storing unit 106.

The pattern recognizing unit 101 of the embodiment recognizes the input pattern, and generates recognition sequence information representing the sequence of recognizing the segment areas constituting the input pattern. In addition, the pattern recognizing unit 101 of the embodiment recognizes the input pattern when the mobile terminal device 100 satisfies the condition represented by the input condition information.

In addition, the pattern recognizing unit 101 may recognize the time when the user touches the touch panel 19 after satisfying the condition indicated by the input condition information, as the input start of the input pattern.

The pattern recognizing unit 101 may recognize the time when the touch of the user with the touch panel 19 is released after the input of the input pattern is started, as the input completion of the input pattern. Alternatively, the pattern recognizing unit 101 may recognize the time when the condition indicated by the input condition information is not satisfied after the input of the input pattern is started, as the input completion of the input pattern.

The function activating unit 102 of the embodiment activates the function corresponding to the registered pattern when the function activating unit 102 compares the input pattern recognized by the pattern recognizing unit 101 with the registered pattern stored in the pattern storing unit 106 and the input pattern matches the registered pattern, and when the sequence of the segment areas designated by the sequence designation information corresponding to the registered pattern compared with and matching the input pattern is compared with the sequence of the segments areas indicated by the recognition sequence information generated by the pattern recognizing unit 101 and the sequence of the segment areas matches.

In addition, when the sequence of the segment areas designated by the sequence designation information corresponding to the registered pattern compared with and matching the input pattern is compared with the sequence of the segment areas indicated by the recognition sequence information generated by the pattern recognizing unit 101 and the sequence of the segment areas does not match, the display control unit 21 of Fig. 1 may display and output an error message to the display unit 22, and the sound output unit 15 of Fig. 1 may auditorily output the error message from the speaker 14.

In the embodiment, the method of activating the function corresponding to the registered pattern by the function activating unit 102 is the same as that of the first embodiment.

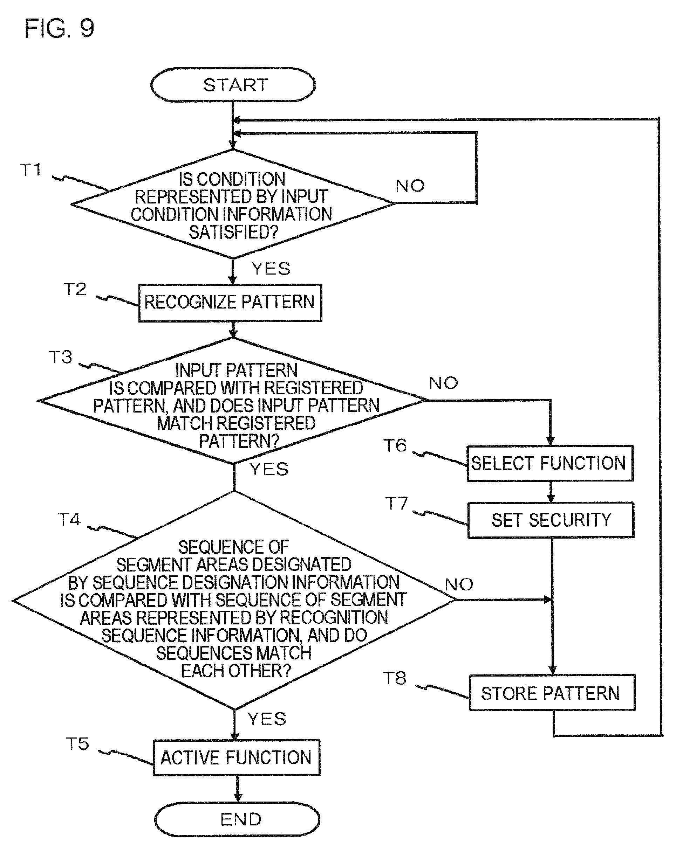

Fig. 9 is a flowchart illustrating the method of controlling the mobile terminal device 100 according to the second embodiment. The control method of the embodiment includes a pattern recognizing step (Step T2) of recognizing the plurality of segment areas continuously touched by the user as the input pattern when the mobile terminal device 100 satisfies the condition represented by the input condition information (Step T1: Yes). In addition, in the pattern recognizing step (Step T2), the input pattern is recognized, and the recognition sequence information representing the sequence of recognizing the segment areas constituting the input pattern is generated. However, when the mobile terminal device 100 does not satisfy the condition indicated by the input condition information (Step T1: No), it enters a standby state until the condition is satisfied.

The control method of the embodiment includes a function activating step (Step T5) of activating the function corresponding to the registered pattern when the input pattern recognized in the pattern recognizing step (Step T2) is compared with the registered pattern stored in the pattern storing step (Step T8) and the input pattern matches the registered pattern (T3: Yes), and when the sequence of the segment areas designated by the sequence designation information corresponding to the registered pattern compared with and matching the input pattern is compared with the sequence of the segments areas indicated by the recognition sequence information generated in the pattern recognizing step (Step T2) and the sequence of the segment areas matches (Step T4: Yes).

However, when the input pattern recognized in the pattern recognizing step (Step T2) is compared with the registered pattern stored in the pattern storing step (Step T8) and the input pattern does not match the registered pattern (Step T3: No), the control method of the embodiment performs the following steps. First, in the function selecting step (Step T6), any of the functions of the mobile terminal device 100 is selected according to the operation input of the user. In the security lock setting step (Step T7), the security lock is set to the function selected in the function selecting step (Step T6). In addition, in the pattern storing step (Step T8), the input pattern which is compared and does not match in Step T3 is associated and stored with the function of setting the security lock in the security lock setting step (Step T7), as the registered pattern.

Herein, the sequence designation information corresponding to the registered pattern stored in Step T8 may be the recognition sequence information generated in Step T2. In addition, when the registered pattern is stored in Step T8, it enters a standby state until the condition is satisfied again.

In addition, when the sequence of the segment areas designated by the sequence designation information corresponding to the registered pattern compared with and matching the input pattern is compared with the sequence of the segment areas indicated by the recognition sequence information generated in the pattern recognizing step (Step T2) and the sequence does not match (Step T4: No), in the pattern storing step (Step T8), the input pattern recognized in the pattern recognizing step (Step T2) and the recognition sequence information generated in the pattern recognizing step (Step T2) are associated and stored as the registered pattern and the sequence designation information, respectively.

In the function activating step (Step T5), the security lock set by the function corresponding to the registered pattern is released and the function is activated. The function is activated in the function activating step (Step S5), and the control method of the embodiment is ended.

Herein, an effect of the embodiment will be described. First, in the embodiment, the input pattern which does not match the registered pattern may be associated and stored with an arbitrary function of the user as a new registered pattern. Accordingly, the user can register the arbitrary registered pattern.

In addition, in the embodiment, when the function to which the security lock is set is associated with the registered pattern and the input pattern matching the registered pattern is received, the security lock set by the function is released, and the function is activated. Generally, when the function to which the security lock is set is operated, a process of inputting a password is performed to release the security lock, and then the function is activated. However, in the embodiment, it is relatively easy to register the complex registered pattern with high security which can be memorized only for the user, and thus there is no problem in security even when the user replaces the operation of inputting the input pattern matching the registered pattern by the operation of releasing the security lock. Accordingly, the operation of two steps of performing the security lock releasing operation and then performing the function operation becomes the operation of one step, and thus there is an effect of reducing the burden on the user based on the operation input and improving the operability.

In addition, since the input sequence of the registered patterns can be determined, it is possible to form the registered pattern with higher secrecy. For example, when the registered pattern patterned on the shape such as characters and symbols which are easily memorized by the user is registered, the pattern can be the registered pattern which is not easily input by people other than the user, by reversing the input sequence to a regular writing sequence.

In addition, since the input condition can be determined for each of the registered patterns, it is possible to prevent the function from operating at the timing which is not intended by the user.

The embodiments of the invention have been described above with reference to the drawings, but are examples of the invention, and various configurations other than the above description may be employed.

For example, each of various software functions realized by executing the programs read from the ROM 11 by the CPU 10 shown in Fig. 3 or Fig. 7 may be realized as a unique hardware circuit, and may be realized by combination of software and hardware.

The constituent elements connected to the bus 25 in Fig. 1 are examples of the embodiments of the invention, a portion thereof may not be provided, and other constituent elements may be connected to the bus 25. For example, a camera capable of taking an image such as a movie and a still image may be connected to the bus 25, and a television antenna receiving a television broadcasting wave and a tuner selecting the received television broadcasting wave may be connected to the bus 25. In this case, the mobile terminal device 100 may have a camera function or a television function.

In addition, in Fig. 2, the outlines of the segment areas are shown by the triangles and rectangles, but the shapes may not be limited thereto.

In addition, in Fig. 9, it is described that after the process of the function selecting step (Step T6), in the security lock setting step (Step T7), the security lock is set to the function selected in Step T6, but the timing of setting the security lock is not limited thereto.

For example, when the security lock is previously set to any of the functions of the mobile terminal device and the function to which the security lock is set is selected in the function selecting step, in the pattern storing step, the input pattern which is compared and does not match may be associated and stored as the registered pattern with the function selected in the function selecting step.

In addition, in Fig. 9, in Step T3: No or in Step T4: No, the case when the input pattern recognized in Step T2 and the recognition sequence information generated in Step T2 are associated and stored as the registered pattern and the sequence designation information in Step T8 is shown. In this case, a step in which the user optionally selects whether to associate and store the registered pattern and the sequence designation information in Step T8 may be provided.

In addition, naturally, the embodiment described above and the plurality of modified examples may be combined within the scope in which the content is not contrary. In addition, in the embodiments described above and the modified examples, the functions of the constituent elements have been described in detail, but the functions may be variously modified within the scope satisfying the invention.

In the method of controlling the mobile terminal device of the invention, the plurality of steps are sequentially described, but the sequence of the description is not limited to the sequence of performing the plurality of steps. For this reason, when the method of controlling the mobile terminal device of the invention is performed, the sequence of the plurality of steps may be modified within the scope in which the content is not changed.

This application claims priority based on Japanese Patent Application No. 2009-119959 filed on May 18, 2009, the disclosure of which is incorporated herein by reference in its entirety.

## Claims

1. A mobile terminal device comprising:
a touch panel in which one of a plurality of segment areas is adjacent to the other segment areas different in at least three directions;
a pattern storing unit that associates and stores any of the functions of the mobile terminal device with a registered pattern formed of the plurality of adjacent segment areas of the segment areas of the touch panel;
a pattern recognizing unit that recognizes the plurality of segment areas continuously touched by a user, as an input pattern; and
a function activating unit that compares the input pattern recognized by the pattern recognizing unit with the registered pattern stored in the pattern storing unit, and activates the function corresponding to the registered pattern when the input pattern matches the registered pattern.

2. The mobile terminal device according to claim 1, wherein a part or all of the segment areas of the touch panel are adjacent in at least 3 directions to the other segment areas which are respectively different.

3. The mobile terminal device according to claim 1 or 2, further comprising a security lock setting unit that sets a security lock to suppress several operations of the functions of the mobile terminal device,
wherein the pattern storing unit associates and stores the function of the security lock set by the security lock setting unit with the registered pattern, and
wherein the function activating unit releases the security lock set by the function corresponding to the registered pattern, and activates the function.

4. The mobile terminal device according to any one of claims 1 to 3,
wherein the pattern storing unit associates and stores sequence designation information for designating at least one sequence of the segment areas constituting the registered pattern with the registered pattern, and
wherein the pattern recognizing unit recognizes the input pattern, and generates recognition sequence information representing a sequence of recognizing the segment areas constituting the input pattern,
wherein the function activating unit compares the sequence of the segment areas designated by the sequence designation information corresponding to the registered pattern compared with and matching the input pattern, with the sequence of the segment areas indicated by the recognition sequence information generated by the pattern recognizing unit, and activates the function corresponding to the registered pattern when the sequence matches.

5. The mobile terminal device according to any one of claims 1 to 4, further comprising a function selecting unit that selects any of the functions of the mobile terminal device according to the operation input of the user when the function activating unit compares the input pattern recognized by the pattern recognizing unit with the registered pattern stored in the pattern storing unit and the input pattern does not match the registered pattern,
wherein the pattern storing unit associates and stores the input pattern as the registered pattern with the function selected by the function selecting unit.

6. The mobile terminal device according to any one of claims 1 to 5,
wherein the pattern storing unit associates and stores input condition information representing a condition of receiving the input pattern with the registered pattern, and
wherein the pattern recognizing unit recognizes the input pattern when the mobile terminal device satisfies the condition represented by the input condition information.

7. A method of controlling a mobile terminal device comprising:
associating and storing any of the functions of the mobile terminal device with a registered pattern formed from a plurality of adjacent segment areas over a touch panel in which one of the plurality of segment areas is adjacent to the other segment areas different in at least three directions;
recognizing the plurality of segment areas continuously touched by a user, as an input pattern; and
comparing the input pattern recognized in the recognizing of the pattern with the registered pattern stored in the storing of the pattern, and activating the function corresponding to the registered pattern when the input pattern matches the registered pattern.

8. A storage medium in which computer-readable programs are stored,
wherein the program causes a computer to execute:
associating and storing any of the functions of the mobile terminal device with a registered pattern formed from a plurality of adjacent segment areas over a touch panel in which one of the plurality of segment areas is adjacent to the other segment areas different in at least three directions;
recognizing the plurality of segment areas continuously touched by a user, as an input pattern; and
comparing the input pattern recognized in the recognizing of the pattern with the registered pattern stored in the storing of the pattern, and activating the function corresponding to the registered pattern when the input pattern matches the registered pattern.
